# EUROPÄISCHE PATENTSCHRIFT

(11) **EP 3 750 674 B1**
(45) Veröffentlichungstag und Bekanntmachung des Hinweises auf die Patenterteilung: **08.10.2025**
(21) Anmeldenummer: 20175754.9
(22) Anmeldetag: 20.05.2020
(51) Int. Cl.: B25J 9/04, B25J 9/10, B25J 18/02

(54) **ROBOTERARM SOWIE VERFAHREN ZU SEINER STEUERUNG**
ROBOTIC ARM AND METHOD FOR CONTROLLING THE SAME
BRAS ROBOTIQUE ET SON PROCÉDÉ DE CONTROLE

(30) Priorität: 20.05.2019 DE 102019113372; 20.05.2019 DE 202019102846 U
(43) Veröffentlichungstag der Anmeldung: 16.12.2020
(60) Teilanmeldung: 25192947.7
(73) Patentinhaber: Gerhard Schubert GmbH, 74564 Crailsheim (DE)
(72) Erfinder: Ben Salem, Achraf, 74564 Crailsheim (DE)
(74) Vertreter: Weickmann & Weickmann PartmbB

(56) Entgegenhaltungen:
- EP-A1- 1 566 243
- EP-A1- 2 207 648
- EP-B1- 1 566 243
- DE-A1- 102013 112 802
- DE-T2- 69 404 526
- FR-A1- 2 592 828
- JP-A- 2011 240 444
- JP-A- 2014 198 369
- JP-A- H08 290 379
- JP-A- S61 152 381
- US-A- 5 271 292
- US-A- 5 885 052
- US-A1- 2004 001 750

## Beschreibung

### I. Anwendungsgebiet

Die Erfindung betrifft den Roboter-Arm eines Industrieroboters sowie ein Steuerungsverfahren hierfür.

### II. Technischer Hintergrund

In der Industrie werden Roboter benutzt, welche Werkzeuge halten und führen und sich je nach Anwendungszweck in einer unterschiedlichen Anzahl von Freiheitsgraden bewegen können.

Dabei sind sehr unterschiedliche Konstruktionen von Robotern, insbesondere von Roboterarmen, bekannt, die sich für unterschiedliche Lasten und unterschiedliche Bewegungsgeschwindigkeiten mehr oder weniger gut eignen:
So sind beispielsweise sogenannte Delta-Roboter, also mit Parallel-Kinematik, sehr gut dafür geeignet, relativ kleine Lasten sehr schnell zu bewegen, allerdings in einem relativ kleinen Bewegungsradius.

Ein serieller Roboterarm, der aus Oberarm und Unterarm besteht, die gelenkig miteinander verbunden sind, hat einen größeren Wirkbereich, ist jedoch in aller Regel langsamer, kann dafür aber höhere Lasten im Vergleich zum Eigengewicht bewegen.

Eine Bauform eines solchen Roboterarmes besteht darin, dass
- der Oberarm um eine erste, z. B. vertikale, Achsrichtung gegenüber der Umgebung schwenkbar ist,
- der Unterarm gegenüber dem Oberarm um eine zweite, insbesondere zur ersten Achsrichtung parallele, Achsrichtung verschwenkbar ist und
- am freien Ende des Unterarmes eine Axialstrebe in ihrer Axialrichtung bezüglich des Unterarmes quer zu dessen Verlaufsrichtung verfahrbar ist, die an einem Ende einen Werkzeugträger für ein Werkzeug besitzt.
- Das Verschwenken zwischen Ober- und Unterarm kann durch eine Parallelogramm-Strebe bewirkt werden, die von einem Exzenter an der Unterarmaufnahme aus betätigt wird, oder auch durch einen Zahnriemen, der gesteuert ein mit dem Unterarm drehfest verbundenes Ritzel auf der Schwenkachse antreibt.

Dabei ist es bekannt, die Axialstrebe als Spindel auszubilden, die in einer Spindelmutter läuft, die sich im Unterarm befindet, wobei die Spindelmutter z.B. mittels eines Zahnriemens in Drehung versetzt wird, der im Unterarm umläuft und von einem weiteren Zahnriemen angetrieben wird, der im Oberarm umläuft, sodass der antreibende Motor weit entfernt angeordnet werden kann. Dadurch kann die Axialstrebe in ihrer Axialrichtung relativ zum Roboterarm verfahren werden.

Je nach Anwendungsfall kann es darüber hinaus notwendig sein, dass die Axialstrebe und dadurch der Werkzeugträger um deren Axialrichtung drehbar ist.

Zusätzlich und/oder stattdessen kann es notwendig sein, dass der Werkzeugträger, der an der Axialstrebe befestigt ist, gegenüber dieser verschwenkbar ist um eine quer zur Axialrichtung liegende Schwenkachse.

Jeder zusätzliche Freiheitsgrad des Roboterarmes bedeutet jedoch zusätzlichen konstruktiven Aufwand und zusätzliches Gewicht, wodurch bei gleicher Antriebsleistung die Bewegungsgeschwindigkeit des Roboterarmes reduziert wird.

In der Verpackungsindustrie werden solche Roboter häufig vielfach hintereinander in Form so genannter Pickerstraßen angeordnet, entlang denen ein Produktförderer Produkte, meist ungeordnet, heranführt, die von den Robotern, auch als Picker bezeichnet, aufgenommen und auf definierte Ablagepositionen, beispielsweise in Kartons, die auf einem ebenfalls entlang der Pickerstraße verlaufenden Behälterförderer stehen, umzusetzen.

JP 2014 198369 A, FR 2 592 828 A1, EP 1 566 243 A1 sowie JP S61 152381 A zeigen jeweils den Oberbegriff des Anspruchs 1, wobei zur Übertragung von Antriebskräften von den Motoren auf die Axialstrebe in der Axial-Antriebseinheit in letzterer nur ein Zahnriemen benutzt wird, in den erstgenannten drei Schriften jeweils zwei Zahnriemen benutzt werden.

Als technologischen Hintergrund zeigen
- die DE 694 04 526 T2 ein chirurgisches, handbetätigtes Instrument für minimal-invasive Eingriffe mit einem langen, dünnen Schaft, an dessen vorderen Ende schwenkbar ein Werkzeug wie eine Schere oder eine Klammer angeordnet ist, welches in seiner Winkelstellung zum Schaft gesteuert veränderbar ist,
- die US 5 885 052 B einen Roboterarm, an dessen freien Ende eine Greif-gabelt schwenkbar befestigt ist, wobei durch einen in dem Roboterarm über zwei Umlenkritzel umlaufenden Zahnriemen und die Befestigung der Greifgabel über zwei beabstandete, jeweils exzentrisch an der einen Umlenkwalze befestigte, Schwenkhebel die Schwenkstellung der Greifgabel steuerbar ist,
- die US 2004/0001750 A1 einen Roboter, bei dem an einer Roboter-Basis zwei Roboterarme, schwenkbar um die gleiche Schwenkachse an der Roboterbasis, vorhanden sind, die jeweils einen Oberarm, einen gelenkig daran befestigten Unterarm sowie eine gelenkig daran befestigte Roboter-Hand umfassen. Die Schwenkstellungen zueinander werden durch im Oberarm sowie im Unterarm umlaufende, endlose, gesteuert antreibbare Zahnriemen eingestellt.

Eine Axialstrebe mit einer Axial-Antriebseinheit im Sinne der Erfindung zeigen diese Schriften jedoch nicht.

### III. Darstellung der Erfindung

### a) Technische Aufgabe

Ausgehend von diesen bekannten Lösungen besteht die Aufgabe gemäß der Erfindung darin, einen gattungsgemäßen Roboterarm mit einer Verschwenkbarkeit des Werkzeugträgers quer zur Axialrichtung der Axialstrebe auszustatten und dennoch leicht und einfach zu gestalten, sowie ein Steuerungs-Verfahren hierfür zur Verfügung zu stellen.

### b) Lösung der Aufgabe

Diese Aufgabe wird durch die Merkmale der Ansprüche **1** und **12** gelöst. Vorteilhafte Ausführungsformen ergeben sich aus den Unteransprüchen.

Bei einem Roboterarm, der
- einerseits eine Axial-Einheit mit einer Axialstrebe aufweist, die entlang ihrer Axialrichtung relativ zum Roboterarm axial verfahrbar ist mittels einer Axial-Antriebseinheit
   sowie
- einem Werkzeugträger, der an der Axialstrebe verschwenkbar ist um eine quer zu deren Axialrichtung verlaufende Schwenkachse
wird diese Aufgabe dadurch gelöst, dass mittels dieser Axial-Antriebseinheit zusätzlich zur axialen Verfahrung der Axialstrebe auch die Schwenkbewegung des Werkzeugträgers relativ zur Axialstrebe bewirkt werden kann, entweder zeitlich versetzt oder auch beides gleichzeitig.

Zu diesem Zweck umfasst die Axial-Antriebseinheit vorzugsweise zwei Hub-Motore, die unabhängig voneinander ansteuerbar sind, sodass durch ihr Zusammenspiel und ihre mechanische Verbindung entweder nur die axiale Verfahrung der Axialstrebe oder nur das Verschwenken des Werkzeugträgers um die Axialstrebe oder beides gemeinsam durchgeführt werden kann.

Auf diese Art und Weise werden Teile der Axial-Antriebseinheit für beide Bewegungen genutzt, sodass der konstruktive Aufwand und vor allem das Gewicht der Axial-Antriebseinheit und damit des gesamten Roboterarmes gering bleiben.

Bei einer ersten Bauform umfasst die Axial-Antriebseinheit ein flexibles, auf Zug belastbares Zugelement wie etwa einen Zahnriemen, mittels dessen die Bewegungen von den zwei separaten Hub-Motoren auf das zu bewegende Teil, also Axialstrebe und/oder Werkzeugträger, übertragen wird.

In einer ersten Variante der ersten Bauform ist dieses Zugelement endlos und läuft über zwei Umkehrrollen um, die in axialer Richtung der Axialstrebe beabstandet an der Axialstrebe drehbar befestigt sind, mit parallel zueinander verlaufenden Rollenachsen, die quer zur Axialrichtung der Axialstrebe stehen.

In Blickrichtung dieser Rollenachsen verläuft somit bezüglich der Axialrichtung und/oder der Längsmitte der Axialstrebe, insbesondere bezüglich der Axialstrebe, einander gegenüberliegend jeweils eines der beiden Trume des Zugelementes, und jedes der beiden Trume ist mit einer der von einem der Hub-Motore angetriebenen Antriebsrolle wirkverbunden.

Der Werkzeugträger, der um eine quer zur Axialrichtung der Axialstrebe, vorzugsweise lotrecht dazu, stehende Schwenkachse verschwenkbar sein soll, ist an der einen der beiden Umkehrrollen so befestigt, dass vorzugsweise die Schwenkachse des Werkzeugträgers mit der Rollenachse dieser Umkehrrolle geometrisch identisch ist, aber der Werkzeugträger drehfest mit der Umkehrrolle verbunden ist.

Vorzugsweise besitzen die beiden Antriebsrollen den gleichen Wirkdurchmesser und greifen auf der gleichen Seite des Querschnittes des Zugelementes, insbesondere des Zahnriemens, an diesem an.

Hinsichtlich der Betriebsweise dieser ersten Variante wird wie folgt vorgegangen:
Soll nur die Axialstrebe axial verfahren werden, und der Werkzeugträger soll in seiner momentanen Schwenklage zu der Umkehrrolle, an der er befestigt ist, belassen werden, so werden die beiden Hub-Motore so angetrieben, dass sich die beiden Trume des endlosen Zugelementes in die gleiche Richtung bewegen und mit gleicher Geschwindigkeit, also nach oben oder nach unten.

Dadurch werden die beiden Umkehrrollen und damit die gesamte Axialstrebe axial relativ zu dem Rest des Roboterarmes verfahren.

Vorzugsweise besitzen die Antriebsrollen einen gleichen Wirkdurchmesser und greifen auf der gleichen Seite des Querschnitts des Zugelementes, wie etwa des Zahnriemens, an, und müssen dann für eine solche axiale Verfahrbewegung der Axialstrebe gegenläufig angetrieben werden, und bei gleichem Wirkdurchmesser der beiden Antriebsrollen auch mit gleicher Drehzahl, da ja die beiden Trume eine gleich große, in die gleiche Richtung weisende, Bewegung vollziehen sollen.

Soll dagegen ausschließlich eine Schwenkbewegung des Werkzeugträgers bewirkt werden, aber die Umkehrrolle, an der der Werkzeugträger befestigt ist, soll ihre axiale Position, also die Position ihrer Rollenachse, nicht verändern und somit die Axialstrebe nicht axial verlagert werden, so müssen die beiden Trume des endlosen Zugelementes in unterschiedliche Richtungen, und wegen des immer gleichen Abstandes der beiden Rollenachsen der Umlenkung natürlich mit der gleichen Strecke pro Zeiteinheit bewegt werden, also in Umlauf um die beiden Umkehrrollen versetzt werden.

Dies wird fortgesetzt, bis sich die beiden Umkehrrollen um einen solchen Winkelbetrag gedreht haben, um den man den Werkzeugträger, der drehfest an einer der Umkehrrollen befestigt ist, verschwenken möchte.

Hierfür müssen - bei Angriff auf der gleichen Seite des Querschnitts des Zugelementes - die Antriebsrollen synchron angetrieben werden mit identischer Umfangsgeschwindigkeit, was bedeutet, dass sie sich bei gleich großem Wirkdurchmesser synchron und gleich schnell drehen müssen.

Vorzugsweise sind dabei beide Antriebsrollen in der Axial-Einheit, entlang der die Axialstrebe geführt ist, gelagert, und insbesondere auch die beiden Hub-Motore an der Axial-Einheit befestigt.

Dies ergibt eine kompakte Bauweise der Axial-Einheit und vor allem eine sehr einfach handhabbare Baugruppe, bestehend aus dem Gehäuse der Axial-Einheit, der darin ausgebildeten Axialführung, darin geführter Axialstrebe, dem endlosen Zugelement, den beiden Umkehrrollen und den beiden Antriebsrollen einschließlich des diese jeweils antreibenden Hub-Motors, sodass diese Einheit im Ganzen in einen zum Beispiel Durchbruch eines Roboterarmes, insbesondere eines Unterarmes eines seriellen Roboterarmes, eingesteckt und gegenüber diesem verschraubt werden kann. Vorzugsweise ist die Axialführung der Innenumfang einer Führungshülse, die - einstückig oder separat - Bestandteil des Gehäuses der Axial-Einheit ist

Eine besonders schlanke und kompakte Bauform der Axialeinheit ergibt sich, wenn die elektrischen Hub-Motore mit ihrer Abtriebswelle nicht fluchtend und koaxial zu der jeweiligen Antriebsrolle angeordnet sind und von dieser und damit in der Regel auch dem Gehäuse der Axialeinheit seitlich abstreben, sondern koaxial zur axialen Richtung um die Axialstrebe herum angeordnet sind.

Wenn dabei der Stator des elektrischen Hubmotors Bestandteil der Axialeinheit, insbesondere deren Gehäuses, ist und der Rotor Bestandteil der Axialführung, besteht zusätzlich der Vorteil, dass die Stromzuführung nur zu der ortsfest am Roboterarm befestigten Axialeinheit, also dem Gehäuse der Axialeinheit, notwendig ist und durch die Bewegung der Axialstrebe keine Bewegungen der elektrischen Zuleitungen innerhalb der Axialeinheit bewirkt werden. Das gleiche Ist auch mit dem später beschriebenen Drehmotor möglich.

In einer bevorzugten Bauform sind die Statoren beider Hubmotore - vorzugsweise auch der Stator des später beschriebenen Drehmotors - Teil des Gehäuses der Axialeinheit, sodass die 2 bzw. 3 elektrischen Motore hierüber mechanisch verbunden sind und das Gehäuse mit deren Statoren ein einziges Bauteil bildet.

Will man das beim Bewegen des Unterarmes jeweils zu beschleunigende Gewicht möglichst gering halten, so könnte man die beiden Hub-Motore von der Axialeinheit weg verlagern, zum Beispiel zu der Schwenkachse zwischen Oberarm und Unterarm des Roboterarmes, oder gar noch weiter von dort zur Schwenkachse zwischen Oberarm und Roboterbasis. Das gleiche Ist auch mit dem später beschriebenen Drehmotor möglich.

Hierfür kann jeweils ein endloses Zugelement, wie etwa ein Zahnriemen, für jeden der Motore im entsprechenden Armteil, zumindest dem Unterarm, umlaufen in einer Ebene, die lotrecht zur axialen Richtung und auch lotrecht zur Schwenkachse zwischen beispielsweise Oberarm und Unterarm verläuft und mit um diese axialen Richtungen drehbare Umlenkollen oder Umlenkhülsen im Eingriff stehen und wirkverbunden sind. Die entsprechenden Motore können dann koaxial auf der Schwenkachse zwischen Oberarm und Unterarm sitzen.

Eine weitere Kraftübertragung von dort zur Roboterbasis mittels jeweils eines weiteren analog umlaufenden Zahnriemens ist möglich, wenn man diese Motore noch weiter entfernt von der Axialeinheit an der Schwenkachse zwischen Oberarm und Roboterbasis anordnen möchte.

In einer besonders einfachen Bauform ist die entsprechenden Umlenkhülse in der Axialeinheit kegelverzahnt und kämmt mit einem Kegelzahnrad, welches koaxial zur Antriebsrolle für den Zahnriemen der Axialstrebe angeordnet ist und mit dieser drehfest verbunden ist.

In einer zweiten Variante dieser ersten Bauform werden statt eines einzigen endlosen Zugelementes ein oder zwei endliche Zugelemente verwendet.

Bei zwei endlichen Zugelementen verläuft jedes über je eine der beiden, oberen und unteren, Umkehrrollen, und die beiden Enden jedes der beiden endlichen Zugelemente sind jeweils auf dem Umfang einer von zwei gesteuert in beide Drehrichtungen antreibbaren Wickelrolle fixiert, die in diesem Fall als Antriebsrollen dienen und wovon sich wie zuvor bei den Antriebsrollen diese auf einander gegenüberliegenden Seiten bezüglich der Axialstrebe befinden.

Zusätzlich sind die beiden Enden der beiden verschiedenen Zugelemente auf der gleichen Wickelrolle so befestigt, dass sich bei Drehung der Wickelrolle dass eine der beiden Zugelemente auf dieser aufwickelt und das andere von dieser abwickelt.

Gegenüber der Lösung mit einem einzigen endlosen Zugelement erscheint dies auf den ersten Blick umständlich.

Benutzt man jedoch ein Zugelement, welches nicht nur zugfest, sondern auch druckfest in seiner Erstreckungsrichtung ist - egal ob aufgrund der Materialeigenschaften des Zug/Schubelementes oder aufgrund einer umgebenden Führung, die ein seitliches Ausweichen verhindert -, so wird nur ein einziges endliches Zugelement benötigt, welches um diejenige, in aller Regel untere, Umkehrrolle Umkehrrolle herumgeführt ist, an der der Werkzeugträger schwenkbar befestigt ist. Die andere Umkehrrolle wird dann nicht mehr benötigt.

Dann kann mittels entsprechender Ansteuerung der mit diesen Wickelrollen wirkverbundenen beiden Hub-Motore die gleiche Vorgehensweise bewirkt werden wie bei der ersten Variante mit einem endlos umlaufenden Zugelement, jedoch zwei Umkehrrollen.

Hinsichtlich der Betriebsweise bei dieser zweiten Variante werden die Wickelrollen - wiederum gleicher Wirkdurchmesser vorausgesetzt - für ein ausschließlich axiales Verfahren der Axialstrebe entweder beide in die Abwickelrichtung oder beide in die Aufwickelrichtung angetrieben werden.

Bei unterschiedlichen Wirkdurchmessern natürlich nicht mit der gleichen Drehzahl, sondern so, dass pro Zeiteinheit die gleiche Länge an Zugelement auf- oder abgewickelt wird.

Für das ausschließliche Bewirken einer Schwenkbewegung des Werkzeugträgers müssen von den beiden Wickelrollen die einen in Aufwickelrichtung, die anderen in Abwickelrichtung angetrieben werden und so, dass sich beide von der Umkehrrolle abstrebenden Trume mit der gleichen Strecke pro Zeiteinheit, lediglich in entgegengesetzte Richtungen, bewegen.

In einer zweiten Bauform umfasst die Axialstrebe zwei Teilstreben, die beide in axialer Richtung verlaufen, und in axialer Richtung sowohl relativ zueinander verschiebbar sind als auch jeweils relativ zur Axialführung verschiebbar sind.

Beide Teilstreben sind mittels je eines Hub-Motors unabhängig voneinander in der Axialrichtung verschiebbar, beispielsweise indem entlang jeder der beiden Teilstreben eine Zahnstange ausgebildet ist, die mit je einem Ritzel kämmt, welches mit je einem der beiden Hub-Motor wirkverbunden ist, insbesondere drehfest verbunden ist.

An einem Ende der beiden sich in etwa über den gleichen Längenbereich erstreckenden Teilstreben ist der Werkzeugträger befestigt und gelenkig mit jeder der beiden Teilstreben verbunden, wofür sich mehrere Detaillösungen anbieten.

Dabei ist in einer 1. Detaillösung die eine Teilstrebe vorzugsweise direkt und verschwenkbar um eine erste Schwenkachse, die quer zur Axialrichtung verläuft, mit dem Werkzeugträger verbunden, während die andere Teilstrebe über eine Zwischenstrebe mit dem Werkzeugträger verbunden ist, wobei die Zwischenstrebe um eine zweite Schwenkachse verschwenkbar am Werkzeugträger befestigt ist, und die beiden Schwenkachsen parallel verlaufend, aber quer zur Axialrichtung zueinander beabstandet sind.

Auch an der sie tragenden Teilstrebe ist die Zwischenstrebe verschwenkbar um eine dritte Schwenkachse befestigt, die parallel zu den ersten beiden Schwenkachsen liegt.

In einer 2. Detaillösung kann der Umfang eines Schwenkbolzens, der Dreh fest mit dem Werkzeugträger verbunden ist und als Schwenkachse dient, um welche der Werkzeugträger schwenkbar ist, eine Außenverzahnung aufweisen, und sich zwischen den unteren Enden der beiden Teilstreben befinden, die jeweils in ihrer dieser Außenverzahnung zugewandten Seite in diesem unteren Bereich als Zahnstange ausgebildet sind, die beide mit der Außenverzahnung kämmen.

Die Betriebsweise dieser zweiten Bauform besteht darin, dass bei Relativverschiebung der beiden Teilstreben zueinander der Werkzeugträger um die erste Schwenkachse, mit der er gegenüber der direkt daran befestigten Teilstrebe verbunden ist, also gegenüber der Axialstrebe, verschwenkt wird.

Die Zwischenstrebe dient dazu, den in einer horizontalen Ebene zur axialen Richtung gemessenen Abstand zwischen erster und zweiter Schwenkachse zu kompensieren.

Werden die beiden Teilstreben dagegen synchron in die gleiche Richtung bewegt, behält der Werkzeugträger seine momentane Drehlage zur Axialstrebe bei und die Axialstrebe wird relativ zum Roboterarm in axialer Richtung verfahren.

### c) Ausführungsbeispiele

Ausführungsformen gemäß der Erfindung sind im Folgenden beispielhaft näher beschrieben. Es zeigen:
- **Fig. 1:**: eine Pickerstraße in der Aufsicht von oben,
- **Fig. 2a - c:**: einen Teil eines Roboterarmes einer 1. Bauform - mit endlosem Zugelement - in einzelnen Ansichten,
- **Fig. 3a** - **c:**: einen Teil eines Roboterarmes einer ersten Bauform - mit endlichem Zugelement - in einzelnen Ansichten,
- **Fig. 4a - c:**: einen Teil eines Roboterarmes einer 2. Bauform in einzelnen Ansichten,

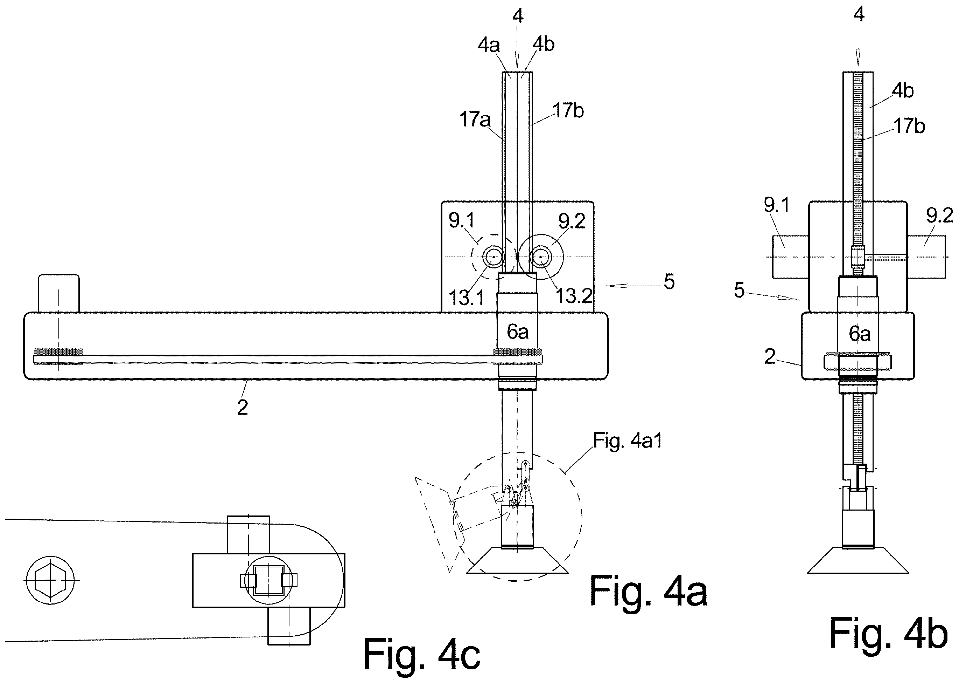

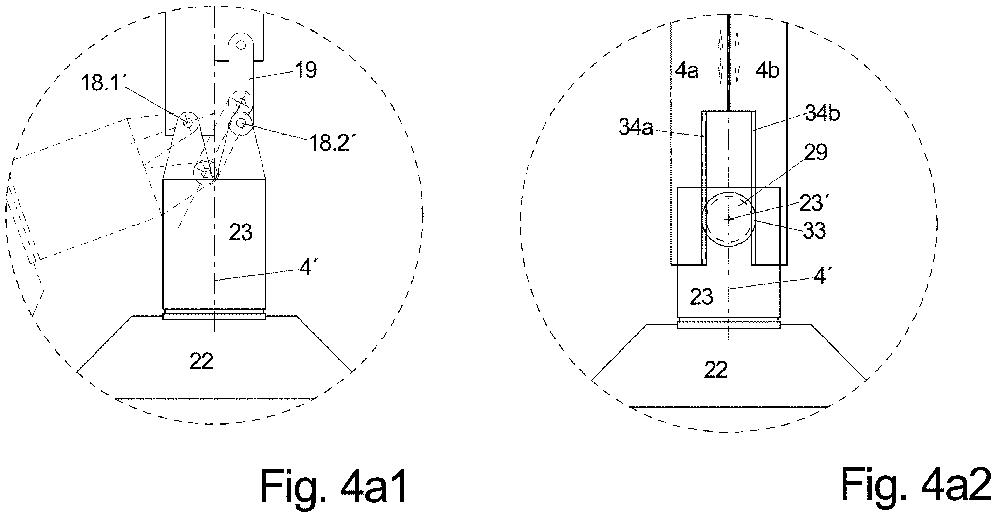

- **Fig. 4a1/2**:: eine Detailvergrößerung aus Figur 4a sowie eine hierzu alternative Lösung

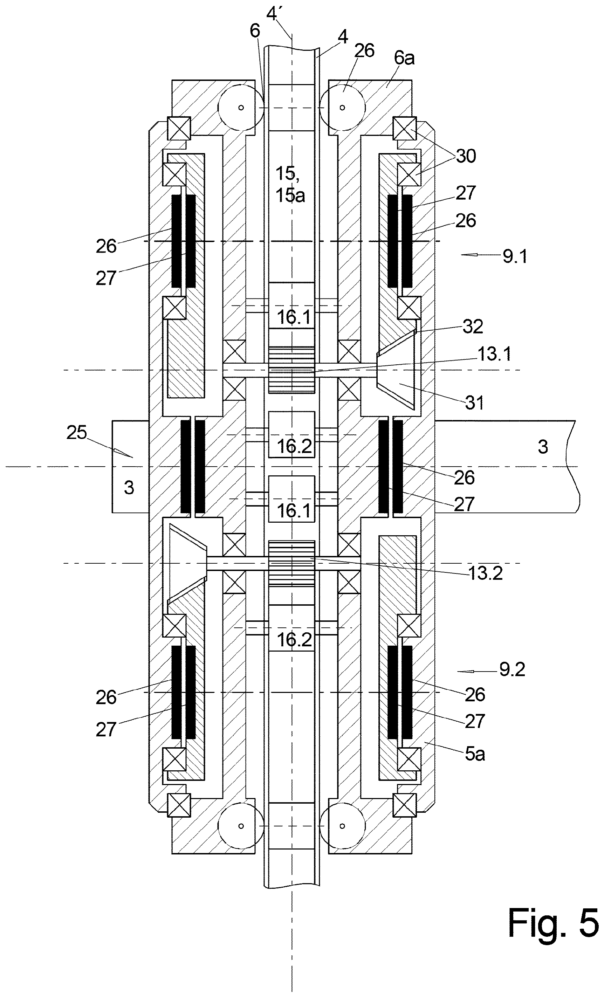

- **Figur 5:**: einen Längsschnitt durch eine Axialeinheit mit koaxialintegrierten Elektromotoren,

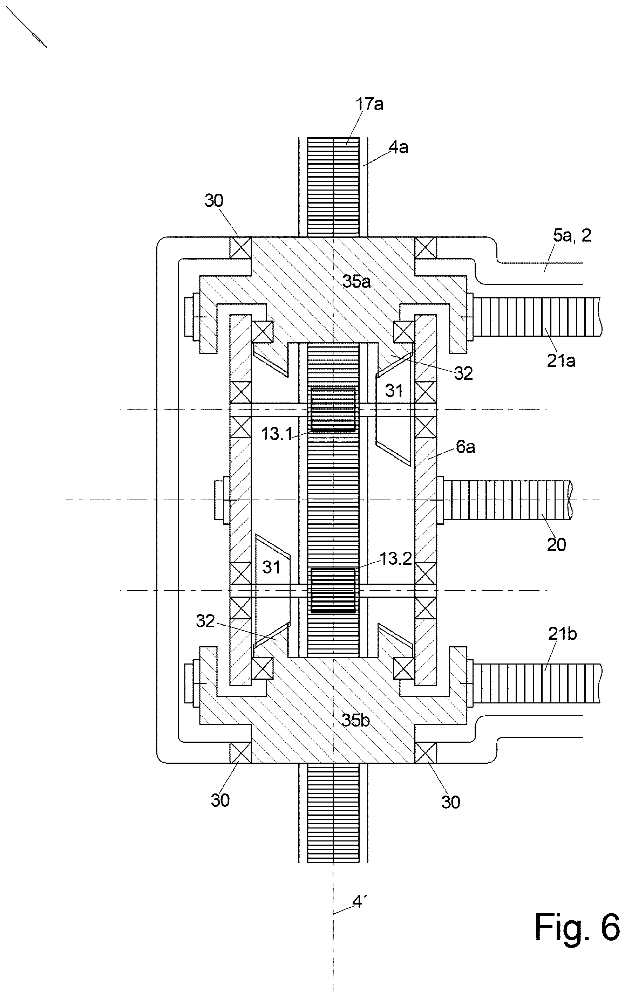

- **Figur 6:**: einen Längsschnitt durch eine axiale Einheit, angetrieben von entfernt liegenden Motoren.

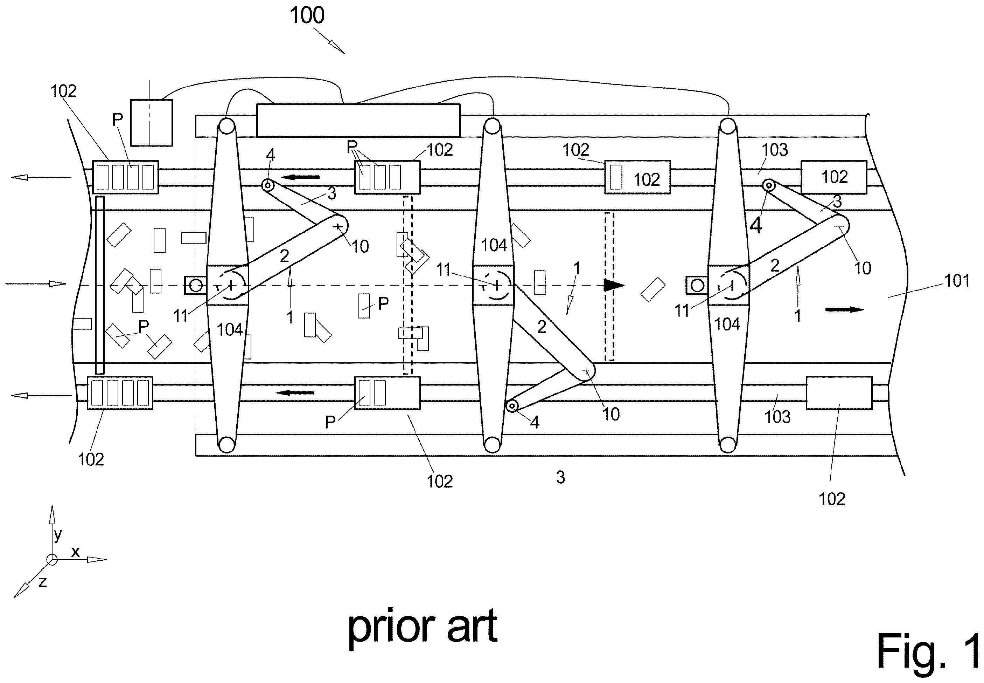

**Figur 1** zeigt eine übliche Pickerstraße oder Roboterstraße **100,** mit deren Hilfe Produkte P, die unregelmäßig auf einem Produkt-Förderer **101** herantransportiert werden, von den Roboterarmen **1** der Roboter **104,** die in Förderrichtung X des Produkt-Förderers **101** hintereinander angeordnet sind, ergriffen und in vorgegebene Positionen in Behältern **102** umgesetzt werden, die auf einem in diesem Fall parallelen Behälter-Förderer **103** heran- und abtransportiert werden.

Die Roboterarme **1** bestehen jeweils aus einem Oberarm **2,** der an einem festen Punkt der Umgebung schwenkbar und gesteuert um eine senkrechte Schwenkachse **11** verschwenkbar ist, sowie einen Unterarm **3,** der um eine ebenfalls vertikale Schwenkachse **10** gegenüber dem freien Ende des Oberarmes **2** gesteuert verschwenkbar ist. Das freie Ende des Unterarmes **3** ist somit in einer lotrecht zu diesen Schwenkachsen **10, 11** liegenden Ebene, in der Regel einer horizontalen Ebene, der X-Y-Ebene gesteuert beweglich

Wie die folgenden Figuren zeigen, ist am freien Ende jedes Roboterarmes **1** ein Werkzeugträger **23** mit daran befindlichem Werkzeug **22,** der quasi die Hand des Roboterarmes darstellt, nicht direkt befestigt, sondern zum Anheben und Absenken eines daran gehaltenen Produktes **P** eine Axialstrebe **4** am freien Ende des Unterarmes 2 befestigt, die den Werkzeugträger 23 trägt.

Die Axialstrebe **4** erstreckt sich in der Höhe, insbesondere der Vertikalen Z, und ist in dieser Richtung beweglich relativ zum Unterarm 3 angeordnet. An ihrem unteren Bereich befindet sich der Werkzeugträger **23** mit dem daran befindlichen Werkzeug **22,** in diesem Fall einem Sauger **22.**

Zusätzlich soll in den meisten Fällen die Axialstrebe **4** um ihre Längsrichtung **4',** die meist die Vertikale, die Z-Richtung ist, drehbar gestaltet sein, was immer dann notwendig ist, wenn es sich bei den Produkten **P** um unrunde Produkte handelt, die jedoch in einer bestimmten Drehlage an der Ablageposition, z.B. in den Behältern **102,** abgelegt werden müssen.

Ein an einem solchen Roboterarm befestigtes Werkzeug besitzt dann somit vier Freiheitsgrade, nämlich die Bewegungsmöglichkeit in allen drei Raumrichtungen sowie die Drehbarkeit um die aufrechte Achse **4'**.

In einigen Anwendungsfällen ist es jedoch notwendig, dass zusätzlich das Werkzeug um eine quer zur axialen Richtung **4'**, in der Regel um eine horizontal liegende, Schwenkachse **23'** verschwenkbar ist, beispielsweise wenn liegend auf einem Produkt-Förderer **101** angelieferte Produkte, z.B. Kekse, in Behältern **2** schräg aufrecht stehend, also geschindelt, abgestellt werden sollen.

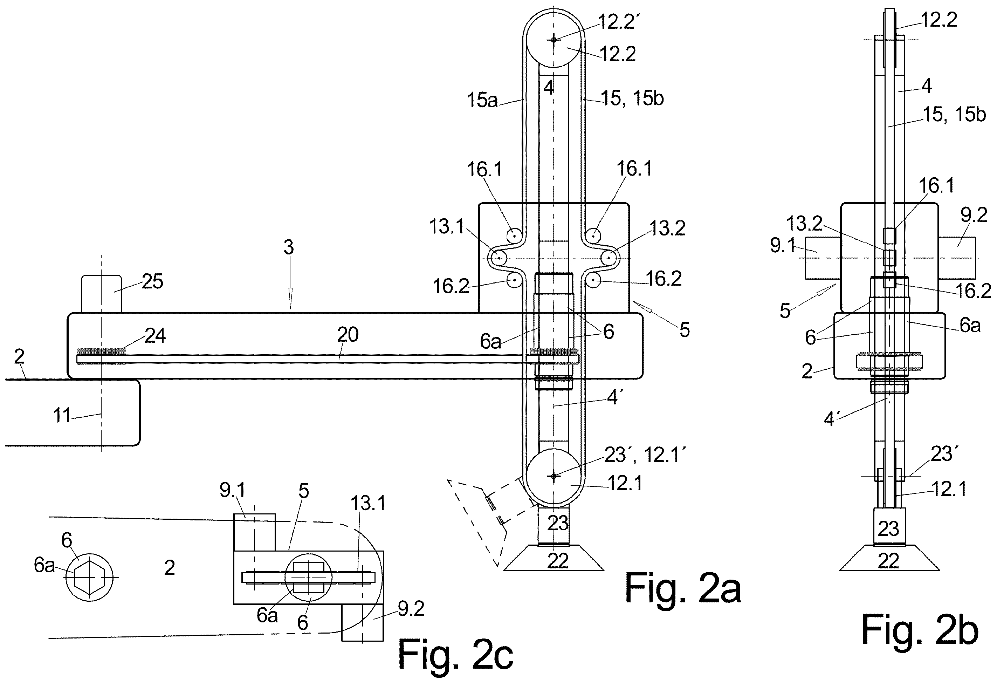

Einen um einen solchen fünften Freiheitsgrad erfindungsgemäßen Roboterarm zeigen die **Figuren 2a** - **c** in einer ersten Bauform:
Dabei wird der für das Verfahren der Axialstrebe **4** in der Höhe benötigte HubAntrieb gleichzeitig genutzt, um das Verschwenken des Werkzeugträgers **23** sowie des daran wechselbar angeordneten, auf das Produkt **P** abgestimmten, Werkzeuges, hier eines Saugers **22,** um eine horizontale Schwenkachse **23'** zu realisieren.

Zu diesem Zweck wird die Verfahrung der Vertikalstrebe **4** entlang ihrer Längsrichtung **4'** relativ zum Unterarm **3** mittels eines endlosen Zahnriemens **15** durchgeführt, der um zwei Umkehrrollen **12.1** und **12.2** umläuft und mit diesen wirkverbunden ist, welche sich am unteren und oberen Ende der Axialstrebe **4** befinden.

In der Axialeinheit **5** ist eine Axialführung **6** ausgebildet, entlang der die Axialstrebe **4** geführt wird. Im vorliegenden Fall besteht die Axialführung **6** aus dem Innenumfang einer Führungshülse **6a,** die insbesondere drehfest in der Axialeinheit **5** angeordnet ist, und durch die sich die Axialstrebe **4** von oben nach unten hindurch erstreckt, während die beiden beidseits der Axialstrebe **4** verlaufenden Trume **15a, 15b** des Zahnriemens **15** außerhalb der Führungshülse **6a** verlaufen.

Die auf den beiden einander gegenüberliegenden Seiten bezüglich der Axialstrebe **4** verlaufenden beiden Trumen **15a, 15b** stehen jeweils mit einer gesteuert antreibbaren Antriebsrolle **13.1, 13.2** in Wirkverbindung, die zur Erzielung eines besseren Umschlingungswinkels etwas weiter von der Axialstrebe **4** entfernt sind als ein direkt von der oberen zur unteren Umkehrrollen **12.1, 12.2** verlaufendes Trum **15a, 15b** des Zahnriemens **15.** Dementsprechend ist beidseits jeder der Antriebsrollen **13.1, 13.2** an dem entsprechenden Trum **15a, 15b** des Zahnriemens **15** anliegend eine von zwei Umlenkrollen **16.1, 16.2** angeordnet, die den Zahnriemen umlenkt zu der entsprechenden Antriebsrolle **13.1, 13.2.**

Wie die **Figuren 2b** und **2c** zeigen, liegen die Umkehrrollen **12.1, 12.2,** sowie die Umlenkrollen **16.1, 16.2** sowie die Antriebsrollen **13.1, 13.2** in einer Ebene, der Umlaufebene des endlosen Zahnriemens **15.**

Die Antriebsrollen **13.1, 13.2** stehen mit dem Zahnriemen **15** in Eingriff, indem sie insbesondere mit dessen Innenseite - bezogen auf die endlos umlaufende Form des Zahnriemens - in Kontakt stehen, die eine Zahnung aufweist, wobei vorzugsweise auch die Umfangsflächen der Umkehrrollen **12.1, 12.2** eine dazu passende Zahnung aufweisen.

Jede der beiden Antriebsrollen **13.1, 13.2** wird von einem von zwei koaxial fluchtend dazu angeordneten Hub-Motoren **9.1, 9.2** angetrieben, die an der Axialeinheit **5** befestigt sind und von deren Gehäuse zur Seite horizontal abstreben.

Der Werkzeugträger **23** ist drehfest mit der unteren Umkehrrolle **12.1** verbunden, sodass die Schwenkachse **23',** um die der Werkzeugträger **23** und damit das Werkzeug **22** verschwenkt werden können, die Rollen-Achse **12.1'** dieser unteren Umlenkrolle **12.1** ist.

Aus **Figur 2a** wird ersichtlich, dass folgende Bewegungen erzielbar sind durch entsprechende Ansteuerung der Hub-Motoren **9.1, 9.2:**
- Verfahren der Axialstrebe **4** in der Führungshülse **6a** nach oben, indem die beiden - hinsichtlich des Wirkdurchmessers gleich großen - Antriebsrollen **13.1 13.2** gegenläufig und mit gleicher Drehzahl angetrieben werden, hiervon die linke Antriebsrolle **13.1** im Uhrzeigersinn, die andere, **13.2** entgegen dem Uhrzeigersinn.
   Bei Drehung der Antriebsrolle **13.1** entgegen dem Uhrzeigersinn und der anderen Antriebsrolle **13.2** im Uhrzeigersinn wird die Axialstrebe **4** nach unten verfahren.
   Der Werkzeugträger **23** verbleibt dabei relativ zur Rollen-Achse **12.1',** also zu seiner Schwenkachse **23'**, in der Schwenklage ohne diese zu ändern.
- Dagegen wird eine Schwenkbewegung des Werkzeugträgers **23** um die Schwenkachse 23' bewirkt, indem die untere Umlenkrolle **12.1** um den entsprechenden Winkelbetrag gedreht wird, was durch entsprechende Abwärtsbewegung des einen Trums **15a** und Aufwärtsbewegung des anderen Trums **15b** oder umgekehrt erfolgt.
   Sind diese beiden Bewegungen gleich schnell, also die Verlagerung der beiden Trume pro Zeiteinheit beträgt dieselbe Strecke, so behält dabei die Axialstrebe **4** ihre ursprüngliche Höhenlage bei.
- Natürlich können auch beide Bewegungen überlagert, also gleichzeitig stattfinden, wobei die Differenzgeschwindigkeit zwischen den beiden Trumen **15a, 15b** das Verdrehen der unteren Umlenkrolle **12.1** und damit Verschwenken des Werkzeugträgers **23** bewirkt, und sich gleichzeitig die Axialstrebe **4** z.B. nach oben bewegt, wenn sich die beiden Trume **15a, 15b** dabei gleichzeitig nach oben bewegen.

Um die Drehbarkeit der Axialstrebe **4** und damit des daran befestigten Werkzeuges **22** um die aufrechte Längsrichtung **4'** der Axialstrebe **4** zu gewährleisten, ist die gesamte Axialeinheit einschließlich der drehfest um die axiale Richtung **4'** darin angeordnete Führungshülse **6a** drehbar um die axiale Richtung **4'** am Unterarm **3** angeordnet, wobei in diesem Fall das Gehäuse der Axialeinheit **5** auf der Oberseite im freien Endbereich des Unterarmes **3** aufsitzt und sich die Führungshülse **6a** der Axialeinheit **5** nach unten in das hohle Innere des Unterarmes **3** hinein erstreckt.

Für die Drehung der Axialeinheit **5** muss deren Führung **6,** insbesondere die Führungshülse **6a,** gedreht werden um die axiale Richtung **4',** da die Axialstrebe **4** drehfest um die Erstreckungsrichtung **4'** in dieser geführt ist.

Zu diesem Zweck ist auf dem Außenumfang der Führungshülse **6a** eine Verzahnung angeordnet, über die ein endloser Zahnriemen **15** umläuft, der angetrieben wird von einer Zahnrolle **24,** die am anderen Ende des Unterarmes **3** angeordnet ist, in diesem Fall drehbar um die Schwenkachse **11,** um die Unterarm **3** und Oberarm **2** relativ zueinander verschwenkbar sind.

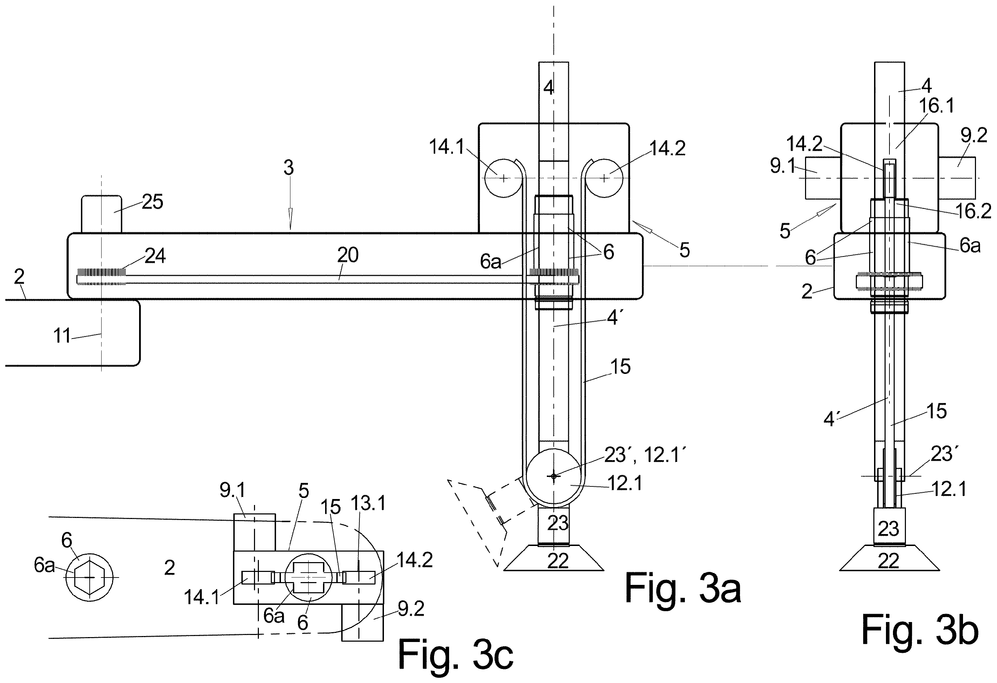

Wie dargestellt, kann diese Zahnrolle **24** angetrieben werden von einem Dreh-Motor **25,** der ebenfalls direkt auf der Schwenkachse **11** sitzt, oder mittels eines weiteren, in **Figur 3** dargestellten Zahnriemens **21.1,** der im hohlen Oberarm **2** verläuft und mit der Zahnrolle **24** in Wirkverbindung steht und von einem Dreh-Motor **25** angetrieben wird, der sich an der Roboter-Basis, also an oder auf dem vom Unterarm 3 abgewandten Ende des Oberarmes **2** befindet.

Alternativ zu den **Figuren 2a** - **c** zeigen die **Figuren 3a** - **c** eine Lösung mit einem endlichen Stück eines Zug-/Druckelementes, welches ein entsprechend steifer Zahnriemen **15** sein kann oder auch ein anderes, sowohl auf Zug als auch auf Druck belastbares, Zug-/Druckelement oder ein Zugelement, welches durch entsprechende seitliche Führung an einem seitlichen Ausbrechen gehindert ist.

Dieses in den **Figuren 3a** - **c** als zugfest und druckfest in seiner Verlaufsrichtung unterstellte, endliche Zug-/Druckelement **15** führt ebenfalls um die untere Umlenkrolle **12.1** herum, ist mit seinen Enden jedoch jeweils an einer Wickelrolle **14.1, 14.2** am Umfang befestigt, die an Stelle der Antriebsrollen **13.1, 13.2** in der Axialeinheit **5** vorhanden sind. Dementsprechend ist eine obere Umlenkrolle nicht mehr notwendig und nicht vorhanden.

Damit ist die gleiche Funktionalität, nämlich aufwärts und abwärts bewegen der Axialstrebe **4** und / oder Verschwenken des Werkzeugträgers **23** um die Schwenkachse **23'** möglich:
Durch gleich schnelles Abwickeln des Zug-/Druckelementes **15** von den beiden Wickelrollen **14.1, 14.2** wird die Axialstrebe **4** nach unten bewegt, durch gleich schnelles Aufwickeln nach oben. Durch unterschiedlich schnelles Auf- und / oder Abwickeln wird mittels der Differenzgeschwindigkeit der Werkzeugträger **23** verschwenkt, wobei gleichzeitig auch eine axiale Verfahrbewegung der Axialstrebe **4** erfolgen kann.

**Figur 5** zeigt eine andere Bauform der Axialeinheit 5 und insbesondere deren Axial-Antriebseinheit 8 - mit Blickrichtung analog zu **Figur 2b** und **Figur 3b** - in einem Axialschnitt, wobei die elektrischen Hub-Motore 9.1, 9.2 sowie der elektrische Drehmotor 25 jeweils aus einem Stator 26 und einem relativ dazu drehbaren Rotor 27 bestehen, die jeweils hülsenförmig ausgebildet sind und sich konzentrisch um die Axialstrebe 4 und deren axiale Richtung 4' herum erstrecken. Dabei ist der radial außen liegende Stator 26 Teil des Gehäuses 5a der Axialeinheit 5, das in diesem Fall fest und nicht drehbar am Unterarm 3 befestigt ist, während der Rotor 27 relativ dazu drehbar mittels Lagern 30 koaxial um die Axialrichtung 4' angeordnet ist.

Auch die Führungshülse 6a mit der darin in ihrer Durchgangsöffnung ausgebildeten Axialführung 6 ist drehbar mittels Lagern 30 um die axiale Richtung 4' gegenüber und im Inneren des Gehäuses 5a der Axialeinheit 5, jedoch unabhängig vom Rotor 27.

In der Führungshülse 6a sind als Axialführung 6 in deren inneren Freiraum vorstehende Führungsrollen 28 gelagert, die an den Außenflächen der Axialstrebe 4 anliegen, vorzugsweise auf allen beispielsweise vier Außenflächen der im Querschnitt viereckigen Axialstrebe 4, sodass bei einer Drehung der Führungshülse 6a um die axiale Richtung 4 auch die Axialstrebe 4 mit gedreht wird.

Wie auch in den **Figuren 3** **und** **2** steht mit jedem der beiden Trume 15a, 15b des Zahnriemens 15 je eine von zwei Antriebsrollen 13.1, 13.2 im Eingriff - wobei durch entsprechend angeordnete je zwei Umlenkrollen 16.1, 16.2 für einen großen Umschlingungswinkel um jede der Antriebsrollen 13.1, 13.2 gesorgt ist -, die in **Figur 5** zur besseren Verständlichkeit in der axialen Richtung 4' versetzt und beide sichtbar dargestellt sind, aber in der Realität sich in Blickrichtung der Figur 5 eine vor und eine hinter der Axialstrebe 4 befinden und auch an der gleichen Axialposition und in Blickrichtung der Figur 5 hintereinander befinden können.

Jede der beiden Antriebsrollen 13.1, 13.2 ist beidseits in der Führungshülse 6a gelagert und mit einem Kegelzahnrad 31 wirkverbunden, insbesondere drehfest verbunden, welches radial außerhalb der Führungshülse 6a angeordnet ist und mit einer stirnseitigen Kegelverzahnung 32 auf dem hülsenförmigen Rotor 27 eines der Hubmotore 9.1, 9.2 kämmt.

Die Antriebsrollen 13.1, 13.2 könnten jedoch ebenso gut mit jeweils einer der an den beiden Teilstreben 4a, b gemäß der 2. Bauform insbesondere der **Figuren 4a bis c** kämmen, sodass die Ausbildung der Axial-Antriebseinheit 8 gemäß Figur 5 für beide Bauformen anwendbar ist.

Auch der Drehmotor 25 ist analog mit seinem Stator 26 fix im Innenumfang des Gehäuses 5a der Axialeinheit 5 und mit seinem Rotor 27 fix auf der Außenseite der Führungshülse 6a koaxial um die Längsrichtung 4' und damit die Axialstrebe 4 herum angeordnet, sodass sich bei Einschalten des Drehmotors 25 die Führungshülse 6a im Inneren des Gehäuses 5a um die axiale Richtung 4' dreht.

Sobald einer der Statoren 27 bestromt wird, setzt sich der entsprechende Motor 9.1, 9.2 oder 25 in Bewegung.

Dadurch wird eine sehr schlanke, kompakte Bauform der Axialeinheit 5 erreicht.

Die **Figuren 4a** **- c** zeigen einen Teil des Roboterarmes in analogen Ansichten wie die **Figuren 2a** **- c,** wobei der Antrieb der Axialstrebe **4** jedoch dadurch erfolgt, dass diese aus zwei parallel zueinander angeordneten und unabhängig voneinander angetriebenen Teilstreben **4a, b** besteht, die in diesem Fall auch aneinander anliegen, und gemeinsam in der sich durch die Axialführung **6** der Führungshülse **6a** hindurch erstrecken, jedoch auch beabstandet zueinander in separaten Führungen geführt sein könnten.

Jede der beiden Teilstreben **4a, b** ist relativ zu der Axialführung **6,** insbesondere der Führungshülse **6a** und damit der Axialeinheit **5** nach oben und unten verfahrbar. Die Teilstreben **4a, b** werden angetrieben durch jeweils wiederum einen Hub-Motor **9.1, 9.2,** die in diesem Fall jeweils eine der Teilstreben **4a, b** über jeweils ein Antriebsritzel **13.1, 13.2** antreiben, welches mit einer in Verlaufsrichtung **4'** an jeder der beiden Teilstreben **4a, b** verlaufenden Zahnstange **17a, b** in Eingriff steht.

Der Werkzeugträger **23** ist mit den unteren Enden beider Teilstreben **4a, b** gelenkig verbunden um jeweils eine Schwenkachse **18.1', 18.2',** wobei diese beiden Schwenkachsen parallel und im Abstand zueinander verlaufen und quer zur axialen Richtung **4',** der Längsrichtung der Axialstrebe **4,** wie am besten in der Detailvergrößerung der **Figur 4a1** aus **Figur 4a** ersichtlich.

Während die Werkzeugaufnahme **23** um eine Schwenkachse **18.1'** direkt am unteren Ende der einen Teilstrebe **4a** befestigt ist, ist sie gegenüber der anderen mittels einer Zwischenstrebe **19** befestigt, die ihrerseits an dem von der Schwenkachse **18.2',** um die sie gegenüber der Werkzeugaufnahme **23** verschwenkbar ist, um eine dazu parallele Schwenkachse an ihrem anderen Ende mit dem unteren Ende der anderen Teilstrebe **4b** verschwenkbar ist.

Durch Relativverschiebung der beiden Teilstreben **4a, b** wird also die Werkzeugaufnahme **23** um die Schwenkachse **18.1'** zum unteren Ende der einen Teilstrebe **4a** verschwenkt, durch synchrone Bewegung der beiden Teilstreben **4a,** b wird die Axialstrebe **4** in axialer Richtung verlagert unter Beibehaltung der Schwenklage des Werkzeugträgers **23.**

Das gleiche kann gemäß **Figur 4a2** erreicht werden durch eine andere Befestigung des Werkzeugaufnahme 23 an den Teilstreben 4a, b:
Hierfür ist auf dem Außenumfang des als Schwenkachse 23' dienenden Schwenkbolzens 29, der drehfest mit dem Werkzeugträger 23 verbunden ist, eine Umfangsverzahnung 33 aufgebracht, die mit jeweils einer Zahnstange 34a, b kämmt, die auf den einander und zu diesem Schwenkbolzen 29 gewandten Innenseiten der beiden Teilstreben 4a, b angeordnet sind in einem solchen Abstand, dass sie beide mit der Umfangsverzahnung 33 im Eingriff stehen.

Durch Relativverfahrung der beiden Teilstreben 4a, b in axialer Richtung 4' wird der Schwenkbolzen und damit der Werkzeugträger 23 um die quer zur axialen Richtung 4' verlaufende Schwenkachse 23' gedreht, kann dabei jedoch auch gleichzeitig ihre axiale Position entlang der axialen Richtung vier' ändern, was bei der Ansteuerung zu berücksichtigen ist.

**Figur 6** zeigt, wie die Axial-Antriebseinheit 8 beabstandet zur Axialeinheit 5 angeordnet werden kann, beispielsweise indem deren - in **Figur 6** nicht dargestellten - Motore 25, 9.1, 9.2 entfernt von der Axialeinheit 5, beispielsweise mit ihren Abtriebswellen fluchtend zur Schwenkachse 11 zwischen Unterarm 2 und Oberarm 3 oder noch weiter entfernt positioniert werden:
Zu diesem Zweck laufen im Unterarm 2 drei endlose Zugelemente, insbesondere Zahnriemen 20, 21a, 21b, um, von denen der Zahnriemen 20 von dem entfernten Drehmotor 25 angetrieben wird und je einer der beiden Zahnriemen 21a, 21b von einem der entfernt angeordneten der beiden Hubmotore 9.1, 9.2 angetrieben wird.

Bei dieser Lösung ist die Axialeinheit 5 - abgesehen von ihren Motoren - vollständig im hohlen Inneren des freien Endes des Unterarmes 2 aufgenommen, aus der nur die Axialstrebe 4 nach unten und gegebenenfalls auch nach oben vorsteht.

In der Oberseite einerseits und der Unterseite des Unterarmes 2 andererseits ist jeweils eine verzahnte Hülse 35a, b drehbar um die axiale Richtung 4' und sich um die Axialstrebe 4 herum erstreckend gelagert. Jede dieser verzahnten Hülsen 35a, b erstreckt sich axial in das Innere des Unterarmes 2 hinein.

Die Führungshülse 6a, in der die Axialstrebe 4 in axialer Richtung 4' geführt ist, ist gegenüber diesen beiden verzahnten Hülsen 35a, b mittels Lagern 30 drehbar ebenfalls um die axiale Richtung ,gelagert.

Im axialen Längenbereich zwischen den beiden Hülsen 35 a, b besitzt die Führungshülse 6a eine Außenverzahnung, die mit dem Zahnriemen 20, der von dem nicht dargestellten Drehmotor 25 angetrieben wird, in Eingriff steht, wodurch die Führungshülse 6a und damit die Axialstrebe 4 um die axiale Richtung 4' gedreht werden kann mittels des Drehmotors 25.

Im vorliegenden Fall besteht die Axialstrebe 4 analog der **Figuren 4a** **bis c** aus zwei Teilstreben 4a, b, auf denen jeweils eine in axialer Richtung 4' verlaufende Zahnstange 17a, b aufgebracht ist, von denen hier nur die Teilstreben 4a mit ihrer Zahnstange 17 a sichtbar ist, während sich die andere Teil strebe in Blickrichtung dahinter befindet.

Die Zahnstange 17a steht mit einem Antriebsritzel 13.1 in Eingriff, welches beidseits in der Führungshülse 6a gelagert ist und drehfest mit einem Kegelzahnrad 31 verbunden ist, welches mit einer Kegelverzahnung 32 auf der ins Innere des Unterarmes 2 hineinragenden Stirnfläche der verzahnten Hülse 35a in Eingriff steht.

Da die verzahnte Hülse 35a auf ihrem Außenumfang eine Verzahnung besitzt, mit der sie mit dem um den Außenumfang herumgeführten Zahnriemen 21a in Eingriff steht, welcher von dem entfernten, nicht dargestellten Hub-Motor 9.1 aus angetrieben wird, kann hierüber die Teilstrebe 4a in axialer Richtung 4' relativ zur Führungshülse 6a und damit dem Unterarm 2 gesteuert verfahren werden.

In gleicher Weise steht ein zweites Antriebsritzel 13.2 mit der in Blickrichtung hinter der sichtbaren Teilstrebe 4a liegenden anderen Teilstrebe und deren Zahnstange im Eingriff, und wird mittels des drehfest damit verbundenen Kegelzahnrades 31 und der Kegelverzahnung 32 auf der Stirnseite der anderen verzahnten Hülse 35b, die von einem analogen anderen Zahnriemen 21b in Drehung versetzt werden kann, angetrieben, um die andere Teilstrebe in axialer Richtung 4' gesteuert zu verfahren.

Die Zahnriemen 20, 21a, 21b laufen somit in zueinander beanstandeten Ebenen um, die lotrecht zur axialen Richtung 4' liegen.

**Figur 6** lässt erkennen, dass diese Ausbildung der Axialeinheit 5 auch bei der 1. Bauform anwendbar ist, also die Antriebsritzel 13.1, 13.2 auch mit der Verzahnung auf einem entsprechenden, endlichen oder endlosen, Zahnriemen 15 in Eingriff stehen könnten.

### BEZUGSZEICHENLISTE

- **1**: Roboter-Arm
- **2**: Oberarm
- **3**: Unterarm
- **4**: Axialstrebe
- **4a, b**: Teilstrebe
- **4'**: Längsrichtung, axiale Richtung
- **5**: Axialeinheit, 5a Gehäuse
- **6**: Axialführung
- **6a**: Führungshülse
- **7**a, b: Befestigungspunkt
- **7**: Verlaufsrichtung
- **8**: Axial-Antriebseinheit
- **9a, b**: Hub-Motor
- 10: Schwenkachse
- **11**: Schwenkachse
- **12.1, 12.2**: Umkehrrolle
- **12.1', 12.2'**: Rollen-Achse
- **13.1, 13.2**: Antriebsrolle, Antriebsritzel
- **14.1, 14.2**: Wickelrolle
- **15**: Zugelement, Zahnriemen
- **16.1, 16.2**: Umlenkrolle
- **17a, 17b**: Zahnstange
- **18.1' 18.2'**: Schwenkachse
- **19**: Zwischenstrebe
- **20**: Zugelement, Zahnriemen
- **21**: Zugelement, Zahnriemen
- **22**: Sauger
- **23**: Werkzeugträger
- **23'**: Schwenkachse
- **24**: Zahnrolle
- **25**: Drehmotor
- **26**: Statue
- **27**: Rotor
- **28**: Führungsrolle
- **29**: Schwenkbolzen
- **30**: Lager
- **31**: Kegelzahnrad
- **32**: Kegelverzahnung
- **33**: Umfangsverzahnung
- **34a, b**: Zahnstange
- **35a, b**: verzahnte Hülse

- **100**: Roboterstraße, Pickerstraße
- **101**: Produkt-Förderer
- **102**: Behälter
- **103**: Behälter-Förderer
- **104**: Roboter, Roboterbasis

- **P**: Produkt

## Patentansprüche

1. Roboterarm (1) mit einer Axialeinheit (5) umfassend
- ein Gehäuse (5a), das am Roboterarm (1) befestigt ist,
- eine in der Axialeinheit (5) ausgebildete Axialführung (6),
- eine Axialstrebe (4), die relativ zu der Axialführung (6) in ihrer Axialrichtung (4') verfahrbar ist,
- einen Werkzeugträger (23), der an der Axialstrebe (4), insbesondere an deren freien Ende, verschwenkbar um eine quer zur Axialrichtung (4') verlaufende Schwenkachse (23') befestigt ist,
- eine Axial-Antriebseinheit (8) mit zwei Hub-Motoren (9.1, 9.2) und zwei Antriebsrollen (13.1, 13.2), welche die Verfahrbewegung der Axialstrebe (4) bewirken,
- wobei die Axial-Antriebseinheit (8) so ausgebildet ist, dass sie die Schwenkbewegung des Werkzeugträgers (23) bewirken kann,
**dadurch gekennzeichnet, dass**
- die beiden Hubmotore (9.1, 9.2) Elektromotore sind, die mit ihrer Rotationsachse koaxial mit der Axialstrebe (4) um die Axialstrebe (4) herum angeordnet sind
oder
- die beiden Hubmotore (9.1, 9.2) abseits der Axialstrebe (4) angeordnet sind, und
- der jeweilige Hubmotor mit der Axialeinheit (5) wirkverbunden ist mittels jeweils eines in dem jeweiligen Armteil (2, 3) umlaufenden endlosen Zugelementes (20, 21a, 21b), welches über je eine koaxial um die Axialstrebe (4) herum angeordnete, damit wirkverbundene, Hülse (6a, 35a, 35b) im Eingriff steht, die jeweils eine der Antriebsrollen (13.1, 13.2) über je ein Kegel-Zahnrad (31) antreibt.

2. Roboterarm nach Anspruch 1,
**dadurch gekennzeichnet, dass**
- die Hülse jeweils eine Antriebsrolle (13.1, 13.2) über je ein Kegel-Zahnrad (31) antreibt.

3. Roboterarm nach Anspruch 1 oder 2,
**dadurch gekennzeichnet, dass**
beiden Hubmotore (9.1, 9.2) an der Schwenkachse (11) zwischen Unterarm (3) und Oberarmen (2) oder an der Schwenkachse (10) zwischen Oberarm (3) und Roboterbasis (104) angeordnet sind.

4. Roboterarm nach einem der vorhergehenden Ansprüche,
**dadurch gekennzeichnet, dass**
die Axial-Antriebseinheit (8) aufweist
- zwei in Axialrichtung (4') zueinander beabstandete, an der Axialstrebe (4) drehbar befestigte, Umkehrrollen (12.1, 12.2), deren Rollen-Achsen (12.1', 12.2') parallel zueinander sowie quer zur Axialrichtung (4') verlaufen,
- ein flexibles, auf Zug belastbares, insbesondere nur auf Zug belastbares, insbesondere endloses Zugelement (15), welches über die beiden Umkehrrollen (12.1, 12.2) läuft und dadurch zwei bezüglich der Axialstrebe (4) auf einander gegenüberliegenden Seiten sich in einer Verlaufsrichtung (15'), die eine Komponente der Axialrichtung (4') enthält, erstreckende Trume (15a, b) umfasst,
- jedes der beiden Trume (15a, b) mit einer von zwei unabhängig voneinander gesteuert antreibbaren, insbesondere gleichen Wirkdurchmesser besitzenden, ortsfest an der Axialeinheit (5), montierten, Antriebsrollen (13.1, 13.2) in Wirkverbindung steht,
- an einer der beiden Umkehrrollen (12.1) der Werkzeugträger (23) drehfest so befestigt ist, dass die Schwenkachse (23') des Werkzeugträgers (23) deren Rollenachse (12.1') ist.

5. Roboterarm nach einem der vorhergehenden Ansprüche,
**dadurch gekennzeichnet, dass**
das, insbesondere druckstabile, Zugelement (15) endlich ausgebildet ist, wobei
- je eines seiner beiden Enden an einer drehend antreibbaren Wickelrolle (14.1, 14.2) befestigt ist,
- zwischen den beiden Enden das Zugelement (5) über die Umkehrrolle (12.1) geführt, an der der Werkzeugträger (23) drehfest angeordnet ist, und mit der Umkehrrolle (12.1) wirkverbunden ist.

6. Roboterarm nach einem der vorhergehenden Ansprüche,
**dadurch gekennzeichnet, dass**
jedes der Trume (15a, b) des Zugelementes (15) im Axialbereich der Axialeinheit (5) über mindestens je eine, besser je zwei, Umlenkrollen (16.1, 16.2) in Richtung quer zur Längsrichtung (4') umgelenkt wird zu einer der Antriebsrollen (13.1, 13.2)

7. Roboterarm nach einem der vorhergehenden Ansprüche,
**dadurch gekennzeichnet, dass**
- beide Antriebsrollen (13.1, 13.2) in der Axialeinheit (5) gelagert sind,
- insbesondere die die Antriebsrollen (13.1, 13.2) antreiben den Hub-Motorik (9.1, 9.2) an der Axialführung (6), insbesondere der Führungshülse (6a), befestigt sind.

8. Roboterarm nach Anspruch 1,
**dadurch gekennzeichnet, dass**
- die Axialstrebe (4) zwei Teilstreben (4a, b) umfasst, die in Axialrichtung (4') relativ zueinander sowie jeweils zu der, insbesondere gemeinsamen, Axialführung (6) verschiebbar sind,
- der Werkzeugträger (23) an beiden Teilstreben (4a, b) gelenkig so befestigt ist, dass bei Relativbewegung der beiden Teilstreben (4a, b) in Axialrichtung (4') zueinander der Werkzeugträger (23) verschwenkt wird.

9. Roboterarm nach Anspruch 8,
**dadurch gekennzeichnet, dass**
- der Werkzeugträger (23) um jeweils eine von zwei an ihm ausgebildeten, zueinander parallelen, quer zur Axialrichtung (4') zueinander beanstandeten, Schwenkachsen (18.1'. 18.2') gegenüber je einer der beiden Teilstreben (4a, b) verschwenkbar befestigt ist,
- zwischen einer der beiden Schwenkachsen (18.2') und der daran befestigten Teilstrebe (4b) eine Zwischenstrebe (19) an beiden gelenkig um parallele Schwenkachsen (18.3'. 18.2') befestigt ist
und/oder
- der Werkzeugträger (23) verschwenkbar um die Querachse (23') ist, indem auf seiner Umfangsfläche eine Verzahnung (33) vorhanden ist, die mit je einer Zahnstange (34a, b), die entlang jeweils einer der beiden Teilstreben (4a, b) verläuft, in Eingriff steht.

10. Roboterarm nach einem der vorhergehenden Ansprüche mit
- einem Oberarm (2), der gegenüber der Umgebung um eine, insbesondere nur eine, erste Schwenkachse (10) verschwenkbar ist,
- einem Unterarm (3), der gegenüber dem Oberarm (2) um eine zweite, insbesondere nur eine zweite, Schwenkachse (11) am Oberarm (2) schwenkbar befestigt ist,
**dadurch gekennzeichnet, dass**
- die Axialführung (6) am freien Ende des Unterarmes (3) befestigt ist.

11. Roboterarm nach einem der vorhergehenden Ansprüche,
**dadurch gekennzeichnet, dass**
- die Axialführung (6) die Axialstrebe (4) drehfest um die Axialrichtung (4') führt,
- insbesondere indem die Axialführung (6) einen unrunden Innenumfang aufweist, der formschlüssig mit einem entsprechenden Außenumfang der Axialstrebe (4) zusammenwirkt,
- die Axialführung (6) in einer Führungshülse (6a) ausgebildet ist, die Bestandteil der Axial-Einheit (5) ist und zusammen mit dieser drehbar und axialfest insbesondere im Unterarm (3) befestigt ist
- insbesondere die Führungshülse (6a) mittels eines Zugelementes (15) drehend antreibbar ist, welches im Inneren des Unterarmes (3) verläuft.

12. Verfahren zum Steuern der Axialstrebe (4) und des Werkzeugträgers (23) eines Roboterarmes (1) nach einem der vorhergehenden Ansprüche 1 bis 11,
**dadurch gekennzeichnet, dass**
die beiden Hub-Motore (9.1, 9.2) so angesteuert werden, dass dadurch
- entweder die gewünschte axiale Verfahrbewegung
- und/oder die gewünschte Schwenkbewegung
des Werkzeugträgers (23) bewirkt wird.

13. Verfahren nach Anspruch 12 zum Steuern der Axialstrebe (4) und des Werkzeugträgers (23) eines Roboterarmes (1) nach einem der vorhergehenden Ansprüche 4 bis 7,
**dadurch gekennzeichnet, dass**
für das ausschließliche Erzielen einer axialen Verfahrbewegung der Axialstrebe (4)
- die beiden Trume (15a, b) des Zugelementes (15) synchron angetrieben werden,
- insbesondere die beiden einen gleichen Wirkdurchmesser aufweisenden Antriebsrollen (13.1, 13.2) mit der gleichen Drehzahl gegensynchron angetrieben werden, falls sie auf der gleichen Seite des Querschnittes des Zugelementes (15) angreifen oder synchron angetrieben werden, falls sie auf gegenüberliegenden Seiten des Querschnittes des Zugelementes (15) angreifen.

14. Verfahren nach Anspruch 12 oder 13 zum Steuern der Axialstrebe (4) und des Werkzeugträgers (23) eines Roboterarmes (1) nach einem der vorhergehenden Ansprüche 4 bis 7,
**dadurch gekennzeichnet, dass**
für das ausschließliche Erzielen einer Schwenkbewegung des Werkzeugträgers (23)
- die beiden Trume (15a, b) des einzigen Zugelementes (15) oder die beiden endlichen Zugelemente gegensynchron angetrieben werden,
- insbesondere die beiden einen gleichen Wirkdurchmesser aufweisenden Antriebsrollen (13.1, 13.2) gleich schnell synchron angetrieben werden, oder gleich schnell gegensynchron angetrieben werden, falls sie auf gegenüberliegenden Seiten des Querschnittes des Zugelementes (15) angreifen.

15. Verfahren nach Anspruch 12 zum Steuern der Axialstrebe (4) mit zwei Teilstreben (4a, b) und des Werkzeugträgers (23) eines Roboterarmes (1) nach einem der vorhergehenden Ansprüche 8 bis 11,
**dadurch gekennzeichnet, dass**
für das ausschließliche Erzielen einer axialen Verfahrbewegung der Axialstrebe (4)
- die beiden Teilstreben (4a, b) der Axialstrebe (4) synchron angetrieben werden,
- insbesondere die beiden einen gleichen Wirkdurchmesser aufweisenden Antriebsritzel (13.1, 13.2) mit der gleichen Drehzahl angetrieben werden,
- insbesondere gegenläufig angetrieben werden, falls sie auf den voneinander abgewandten Seiten der beiden Teilstreben (4a, b) angreifen.

16. Verfahren nach Anspruch 12 oder 15 zum Steuern der Axialstrebe (4) mit zwei Teilstreben (4a, b),
**dadurch gekennzeichnet, dass**
für das ausschließliche Erzielen einer Schwenkbewegung des Werkzeugträgers (23)
- die beiden Teilstreben (4a, b) der Axialstrebe (4) in Axialrichtung (4') relativ zueinander angetrieben werden,
- insbesondere gegensynchron angetrieben werden oder nur eine der beiden Teilstreben (4a, b) angetrieben wird.

## Claims

1. Robot arm (1) with an axial unit (5) comprising
- a housing (5a) that is attached to the robot arm (1),
- an axial guidance (6) formed in the axial unit (5),
- an axial strut (4) that is movable in its axial direction (4') in relation to the axial guidance (6),
- a tool carrier (23) that is pivotally attached to the axial strut (4), in particular at the free end thereof, about a pivot axis (23') extending transversely to the axial direction (4'),
- an axial drive unit (8) with two lift motors (9.1, 9.2) and two drive rollers (13.1, 13.2) which cause the displacement of the axial strut (4),
- wherein the axial drive unit (8) is designed in such a way that it may cause the pivot movement of the tool carrier (23),
**characterised in that**
- the two lift motors (9.1, 9.2) are electric motors which are arranged coaxially with the axial strut (4) with their axis of rotation about the axial strut (4)
or
- the two lift motors (9.1, 9.2) arranged away from the axial strut (4), and
- each lift motor is operatively connected with the axial unit (5) by means of a respective endless traction member (20, 21a, 21b) circulating in the respective arm part (2, 3), which is in engagement with a sleeve (6a, 35a, 35b) arranged coaxially about the axial strut (4) and operatively connected thereto, and the sleeve drives one of the drive rollers (13.1, 13.2) via a bevel gear (31).

2. Robot arm according to claim 1,
**characterised in that**
- the sleeve in each case drives a drive roller (13.1, 13.2) via a bevel gear (31).

3. Robot arm according to claim 1 or 2,
**characterised in that**
the two lift motors (9.1, 9.2) are arranged at the pivot axis (11) between a lower arm (3) and upper arms (2) or at the pivot axis (10) between an upper arm (3) and a robot base (104).

4. Robot arm according to any one of the preceding claims,
**characterised in that**
it has an axial drive unit (8)
- two reverse rollers (12.1, 12.2) that are spaced apart from each other in the axial direction (4') and rotatably attached to the axial strut (4), whose rollers axes (12.1', 12.2') extend parallel to each other and transversely to the axial direction (4'),
- a flexible, traction-loadable, in particular only traction-loadable, in particular endless traction member (15) which runs over the two reverse rollers (12.1, 12.2) and thereby comprises two strands (15a, b), extending on mutually opposite sides, in relation to the axial strut (4), in the travel direction (15') that includes a component of the axial direction (4'),
- each of the two strands (15a, b) is operatively connected to one of two drive rollers (13.1, 13.2), which are non-rotationally mounted on the axial unit (5), have, in particular, the same effective diameter, and are independently drivable and controllable,
- the tool carrier (23) is non-rotatably attached to the two reverse rollers (12.1) in such a way that the pivot axis (23') of the tool carrier (23) is their roller axis (12.1').

5. Robot arm according to any one of the preceding claims,
**characterised in that**
the, in particular pressure-stable, traction element (15) is designed as finite, wherein
- one of the two ends is attached to one rotatably drivable mandrel (14.1, 14.2),
- the traction member (5) is guided between the two ends via the reverse roller (12.1) at which the tool carrier (23) is non-rotatably arranged, and is operatively connected to the reverse roller (12.1).

6. Robot arm according to any one of the preceding claims,
**characterised in that**
each strand (15a, b) of the traction member (15) is deflected, in the axial section of the axial unit (5), via at least one, preferably two deflection rollers (16.1, 16.2) in the direction transverse to the longitudinal direction (4') toward one of the drive rollers (13.1, 13.2)

7. Robot arm according to any one of the preceding claims,
**characterised in that**
- the two drive rollers (13.1, 13.2) are mounted in the axial unit (5),
- in particular, the drive rollers (13.1, 13.2), which drive the lift motor assembly (9.1, 9.2), are attached to the axial guide (6), in particular on the guide sleeve (6a).

8. Robot arm according to claim 1,
**characterised in that**
- the axial strut (4) comprises two sub-struts (4a, b) that are moveable in the axial direction (4') relatively to each other as well as, in particular, relative to the common axial guidance (6),
- the tool carrier (23) is attached to the sub-struts (4a, b) in an articulated manner in such a way that, during the relative movement of the sub-struts (4a, b) in axial direction (4') in relation to each other, the tool carrier (23) is pivoted.

9. Robot arm according to claim 8,
**characterised in that**
- the tool carrier (23) is pivotally attached, relative to each of the two sub-struts (4a, b), about one of two pivot axes (18.1', 18.2') formed on it, which are parallel to one another and extend transversely to the axial direction (4'),
- an intermediate strut (19) is attached to both ends about parallel pivot axes (18.3', 18.2') in an articulated manner between one of the two pivot axes (18.2') and the sub-strut (4b) attached thereto,
and/or
- the tool carrier (23) is pivotable about the transverse axis (23') by having a gear (33) at its circumference which is in engagement with a respective rack (34a, b) extending along each of the sub-struts (4a, b).

10. Robot arm according to any one of the preceding claims, with
- an upper arm (2) that is pivotable relative to the surrounding area about one, in particular only one, first pivot axis (10),
- a lower arm (3) that is pivotable attached in relation to the upper arm (2) about a second, in particular only one, second pivot axis (11) in the upper arm (2),
**characterised in that**
- the axial guidance (6) is attached to the free end of the lower arm (3).

11. Robot arm according to any one of the preceding claims,
**characterised in that**
- the axial guidance (6) guides the axial strut (4) non-rotatably about the axial direction (4'),
- in particular by the axial guidance (6) having a non-circular inner circumference which cooperates in a form-fitting manner with a corresponding outer circumference of the axial strut (4),
- the axial guidance (6) is formed in a guide sleeve (6a) that is part of the axial unit (5) and together is rotatably and axially fixedly attached with the latter, in particular in the lower arm (3)
- in particular the guide sleeve (6a) is rotatably drivable by means of a traction member (15) extending inside of the lower arm (3).

12. Method for controlling the axial strut (4) and the tool carrier (23) of a robot arm (1) according to any one of the preceding claims 1 to 11,
**characterised in that**
the two lift motors (9.1,9.2) are driven in such a way that
- either the desired axial displacement
- and/or the desired pivot axis of the tool carrier (23) is effected.

13. Method according to claim 12 for controlling the axial strut (4) and the tool carrier (23) of a robot arm (1) according to any one of the preceding claims 4 to 7,
**characterised in that**
for the exclusive purpose of achieving an axial displacement of the axial strut (4)
- the two strands (15a, b) of the traction member (15) are driven synchronously,
- in particular the two drive rollers (13.1, 13.2) having the same effective diameter are driven counter-synchronously at the same rotational speed if they engage the same side of the cross-section of the traction element (15), or are driven synchronously if they engage opposite sides of the cross-section of the traction element (15).

14. Method according to claim 12 or 13 for controlling the axial strut (4) and the tool carrier (23) of a robot arm (1) according to any one of the preceding claims 4 to 7,
**characterised in that**
for the exclusive purpose of achieving a pivot movement of the tool carrier (23)
- the two strands (15a, b) of the only traction member or of the two finite traction members (15) are driven counter-synchronously,,
- in particular the two drive rolls (13.1, 13.2), having the same effective diameter, are driven synchronously at the same speed or are driven counter-synchronously at the same speed if they engage opposite sides of the cross-section of the traction element (15).

15. Method according to claim 12 for controlling the axial strut (4) with two sub-struts (4a, b) and the tool carrier (23) of a robot arm (1) according to any one of the preceding claims 8 to 11,
**characterised in that**
for the exclusive purpose of achieving an axial displacement of the axial strut (4)
- the two sub-struts (4a, b) of the axial strut (4) are driven synchronously,
- in particular the drive pinions (13.1, 13.2) having the same effective diameter and are driven with the same rotational speed,
- in particular, are driven in opposite directions if they engage on the sides of the two sub-struts (4a, b) that face away from each other.

16. Method according to claim 12 or 15 for controlling the axial strut (4) with two sub-struts (4a, b),
**characterised in that**
for the exclusive purpose of achieving a pivot movement of the tool carrier (23)
- the two sub-struts (4a, b) of the axial strut (4) are driven relative to each other in the axial direction (4'),
- in particular, are driven counter-synchronously or only one of the two sub-struts (4a, b) is driven.

## Revendications

1. Bras de robot (1) avec une unité axiale (5) comprenant
- un boîtier (5a) fixé au bras de robot (1),
- un guidage axial (6) formé dans l'unité axiale (5),
- une entretoise axiale (4) qui est déplaçable par rapport au guidage axial (6) dans sa direction axiale (4'),
- un porte-outil (23) qui est fixé à l'entretoise axiale (4), en particulier à son extrémité libre, de manière pivotante autour d'un axe de pivotement (23') s'étendant transversalement à la direction axiale (4'),
- une unité d'entraînement axial (8) avec deux moteurs de levage (9.1, 9.2) et deux rouleaux d'entraînement (13.1, 13.2) qui provoquent le déplacement de l'entretoise axiale (4),
- dans lequel l'unité d'entraînement axial (8) est conçue de manière à pouvoir provoquer le mouvement de pivotement du porte-outil (23),
**caractérisé en ce que**
- les deux moteurs de levage (9.1, 9.2) sont des moteurs électriques dont l'axe de rotation est coaxial à l'entretoise axiale (4) et disposés autour de l'entretoise axiale (4)
ou
- les deux moteurs de levage (9.1, 9.2) sont disposés à distance de l'entretoise axiale (4), et
- le moteur de levage respectif est relié de manière fonctionnelle à l'unité axiale (5) au moyen d'un élément de traction sans fin (20, 21a, 21b) qui est en prise avec une douille (6a, 35a, 35b) disposé coaxialement autour de l'entretoîse axiale (4) et relié fonctionnellement à celle-ci, qui entraîne respectivement l'un des rouleaux d'entraînement (13.1, 13.2) par l'intermédiaire d'une roue dentée conique (31) respectif.

2. Bras de robot selon la revendication 1,
**caractérisé en ce que**
la douille entraîne respectivement un rouleau d'entraînement (13.1, 13.2) par l'intermédiaire d'une roue dentée conique (31) respectif.

3. Bras de robot selon la revendication 1 ou 2,
**caractérisé en ce que**
les deux moteurs de levage (9.1, 9.2) sont disposés sur l'axe de pivotement (11) entre l'avant-bras (3) et les bras supérieurs (2) ou sur l'axe de pivotement (10) entre le bras supérieur (3) et la base de robot (104).

4. Bras de robot selon l'une des revendications précédentes,
**caractérisé en ce que**
l'unité d'entraînement axial (8) comprend
- deux rouleaux de renvoi (12.1, 12.2) espacés l'un de l'autre dans la direction axiale (4') et fixés de manière rotative à l'entretoise axiale (4), dont les axes de rouleau (12.1, 12.2') sont parallèles entre eux et transversaux à la direction axiale (4'),
- un élément de traction (15) flexible, pouvant être soumis à une traction, en particulier pouvant être soumis uniquement à une traction, en particulier sans fin, qui s'étend sur les deux rouleaux de renvoi (12.1, 12.2) et qui comprend ainsi deux brins (15a, b) s'étendant sur des côtés opposés par rapport à l'entretoise axiale (4) dans une direction d'extension (15') qui contient une composante de la direction axiale (4'),
- chacun des deux brins (15a, b) étant en liaison active avec l'un des deux rouleaux d'entraînement (13.1, 13.2) pouvant être entraînés de manière indépendante l'un de l'autre, en particulier montés de manière fixe sur l'unité axiale (5) et possédant le même diamètre actif,
- le porte-outil (23) étant fixé solidaire en rotation à l'un des deux rouleaux de renvoi (12.1) de telle sorte que l'axe de pivotement (23') du porte-outil (23) est l'axe de roulement (12.1') de ceux-ci.

5. Bras de robot selon l'une des revendications précédentes, **caractérisé en ce que** l'élément de traction (15), en particulier stable à la pression, est de conception finie,
- dans lequel respectivement une de ses deux extrémités est fixée à un rouleau d'enroulement (14.1, 14.2) pouvant être entraîné en rotation,
- l'élément de traction (5) étant guidé entre les deux extrémités via la poulie de renvoi (12.1) sur laquelle le porte-outil (23) est disposé de manière solidaire en rotation, et étant relié de manière fonctionnelle à la poulie de renvoi (12.1).

6. Bras de robot selon l'une des revendications précédentes,
**caractérisé en ce que**
chacun des brins (15a, b) de l'élément de traction (15) est dévié dans la zone axiale de l'unité axiale (5) par au moins une, mieux deux, poulies de renvoi (16.1, 16.2) dans une direction transversale à la direction longitudinale (4') vers l'une des poulies d'entraînement (13.1, 13.2).

7. Bras de robot selon l'une des revendications précédentes,
**caractérisé en ce que**
- les deux rouleaux d'entraînement (13.1, 13.2) sont montés dans l'unité axiale (5),
- en particulier le mécanisme de levage (9.1, 9.2) entraînant les rouleaux d'entraînement (13.1, 13.2) est fixé au guidage axial (6), en particulier à la douille de guidage (6a).

8. Bras de robot selon la revendication 1,
**caractérisé en ce que**
- l'entretoise axiale (4) comprend deux entretoises partielles (4a, b) qui peuvent être déplacées dans la direction axiale (4') l'une par rapport à l'autre et chacune par rapport au guidage axial (6), en particulier commun,
- le porte-outil (23) est fixé de manière articulée sur les deux entretoises partielles (4a, b) de telle sorte que, lors d'un mouvement relatif des deux entretoises partielles (4a, b) dans la direction axiale (4') l'une par rapport à l'autre, le porte-outil (23) est pivoté.

9. Bras de robot selon la revendication 8,
**caractérisé en ce que**
- le porte-outil (23) est pivotant respectivement autour d'un de deux axes de pivotement (18.1', 18.2') formés au porte-outil, parallèles l'un à l'autre, avec l'un à l'autre une distance orthogonale à la direction axiale (4'), par rapport respectivement à l'un des deux entretoises (4a, b),
- entre l'un des deux axes de pivotement (18.2') et l'entretoise partielle (4b) qui y est fixée, une entretoise intermédiaire (19) est fixée de manière articulée autour des axes de pivotement parallèles (18.3'. 18.2')
et/ou
- le porte-outil (23) peut pivoter autour de l'axe transversal (23') grâce à une denture (33) présente sur sa surface périphérique, qui est en prise avec une crémaillère (34a, b) respective s'étendant respectivement le long d'une des deux entretoises partielles (4a, b).

10. Bras de robot selon l'une des revendications précédentes, comprenant
- un bras supérieur (2) pouvant pivoter par rapport à l'environnement autour d'un premier axe de pivotement (10), en particulier un seul axe de pivotement,
- un bras inférieur (3), qui est fixé de manière pivotante par rapport au bras supérieur (2) autour d'un deuxième axe de pivotement (11), en particulier seulement un deuxième axe de pivotement, sur le bras supérieur (2),
**caractérisé en ce que**
- le guidage axial (6) est fixé à l'extrémité libre du bras inférieur (3).

11. Bras de robot selon l'une des revendications précédentes,
**caractérisé en ce que**
- le guidage axial (6) guide l'entretoîse axiale (4) de manière solidaire en rotation autour de la direction axiale (4'),
- en particulier **en ce que** le guidage axial (6) présente une circonférence intérieure non circulaire qui coopère par complémentarité de forme avec une circonférence extérieure correspondante de l'entretoîse axiale (4),
- le guidage axial (6) est formé dans une douille de guidage (6a) qui fait partie de l'unité axiale (5) et est fixée avec celle-ci de manière rotative et axialement fixe, en particulier dans l'avant-bras (3),
- en particulier la douille de guidage (6a) peut être entraînée en rotation au moyen d'un élément de traction (15) qui s'étend à l'intérieur de l'avant-bras (3).

12. Procédé pour commander l'entretoîse axiale (4) et le porte-outil (23) d'un bras de robot (1) selon l'une des revendications précédentes 1 à 11,
**caractérisé en ce que**
les deux moteurs de levage (9.1, 9.2) sont commandés de telle sorte que
- soit le mouvement de déplacement axial souhaité
- et/ou le mouvement de pivotement souhaité du porte-outil (23) est provoqué.

13. Procédé selon la revendication 12 pour commander l'entretoîse axiale (4) et le porte-outil (23) d'un bras de robot (1) selon l'une des revendications 4 à 7 précédentes,
**caractérisé en ce que**
pour obtenir exclusivement un mouvement de déplacement axial de l'entretoîse axiale (4)
- les deux brins (15a, b) de l'élément de traction (15) sont entraînés de manière synchrone,
- en particulier les deux rouleaux d'entraînement (13.1, 13.2) présentant un même diamètre actif sont entraînés à la même vitesse de rotation de manière synchrone en sens inverse lorsqu'ils s'engagent sur le même côté de la section transversale de l'élément de traction (15) ou sont entraînés de manière synchrone lorsqu'ils s'engagent sur des côtés opposés de la section transversale de l'élément de traction (15).

14. Procédé selon la revendication 12 ou 13 pour commander l'entretoîse axiale (4) et le porte-outil (23) d'un bras de robot (1) selon l'une des revendications précédentes 4 à 7,
**caractérisé en ce que**
pour obtenir exclusivement un mouvement de pivotement du porte-outil (23),
- les deux brins (15a, b) du seul élément de traction (15) ou les deux éléments de traction finis sont entraînés de manière synchrone en sens inverse,
- en particulier les deux rouleaux d'entraînement (13.1, 13.2) présentant un même diamètre actif sont entraînés à la même vitesse de manière synchrone, ou sont entraînés à la même vitesse de manière synchrone en sens inverse lorsqu'ils s'engagent sur des côtés opposés de la section transversale de l'élément de traction (15).

15. Procédé selon la revendication 12 pour commander l'entretoîse axiale (4) avec deux entretoîses partielles (4a, b) et le porte-outil (23) d'un bras de robot (1) selon l'une des revendications précédentes 8 à 11,
**caractérisé en ce que**
pour obtenir exclusivement un mouvement de déplacement axial de l'entretoîse axiale (4)
- les deux entretoises partielles (4a, b) de l'entretoîse axiale (4) sont entraînées de manière synchrone,
- en particulier les deux pignons d'entraînement (13.1, 13.2) présentant un même diamètre actif sont entraînés à la même vitesse de rotation,
- en particulier en sens inverse, s'ils s'engagent sur les côtés opposés des deux entretoîses partielles (4a, b).

16. Procédé selon la revendication 12 ou 15 pour commander l'entretoîse axiale (4) avec deux entretoîses partielles (4a, b),
**caractérisé en ce que** ,
pour obtenir exclusivement un mouvement de pivotement du porte-outil (23) ,
- les deux entretoises partielles (4a, b) de l'entretoise axiale (4) sont entraînées dans la direction axiale (4') l'une par rapport à l'autre,
- en particulier entraînées de manière synchrone en sens inverse, ou seule l'une des deux entretoises partielles (4a, b) est entraînée.
